## Europäisches Patentamt
## European Patent Office
## Office européen des brevets

(19)

(11) Veröffentlichungsnummer: **0 017 967**
**B1**

(12) **EUROPÄISCHE PATENTSCHRIFT**

(45) Veröffentlichungstag der Patentschrift:
14.07.82

(51) Int. Cl.³: **B 23 B 29/034**

(21) Anmeldenummer: 80102030.6

(22) Anmeldetag: 16.04.80

(54) **Bohrwerkzeug mit einem radial verstellbaren Drehmeissel.**

(30) Priorität: 20.04.79 DE 2915976

(43) Veröffentlichungstag der Anmeldung:
29.10.80 Patentblatt 80/22

(45) Bekanntmachung des Hinweises auf die Patenterteilung:
14.07.82 Patentblatt 82/28

(84) Benannte Vertragsstaaten:
AT BE CH FR GB IT LI NL SE

(56) Entgegenhaltungen:
**BE-A-444 336**
**US-A-2 816 767**
**US-A-3 296 898**

(73) Patentinhaber: **Coromant Engineering GmbH Gesellschaft zur Projektierung von Industrieanlagen, Dr.-Werner-Freyberg-Strasse 7, D-6941 Laudenbach (DE)**

(72) Erfinder: **Horsch, Wilfried, Pfaffenklinge 10, D-6951 Obrigheim (DE)**
Erfinder: **Wolf, Wilhelm, Dr. Ing., Am Holderbusch 4, D-6941 Laudenbach (DE)**

(74) Vertreter: **Katscher, Helmut, Dipl.-Ing., Bismarckstrasse 20, D-6100 Darmstadt (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Bohrwerkzeug mit einem radial verstellbaren Drehmeißel

Die Erfindung betrifft ein Bohrwerkzeug mit einem radial verstellbaren Drehmeißel nach dem Oberbegriff des Hauptanspruchs. Bei einem derartigen bekannten Bohrwerkzeug (DE-A-2 040 020), das insbesondere für Feinbohrarbeiten bestimmt ist, kann eine radiale Verstellung des Drehmeißels durch eine axiale Bewegung einer in der Werkzeugmaschinenspindel angeordneten Schubstange vorgenommen werden. Das vordere Ende der Schubstange bildet einen Verstellkörper, der eine schwach geneigte Keilfläche aufweist. An dieser Keilfläche stützt sich ein Stützarm ab, der mit einer federnd schwenkbar gelagerten Bohrstange verbunden ist, die den Drehmeißel trägt.

Eine radiale Verstellung des Drehmeißels ist erwünscht oder erforderlich, um den Durchmesser einer mit dem Drehmeißel bearbeiteten Bohrung zu verändern, beispielsweise wenn nach einem Bearbeitungsvorgang an der Drehmeißelschneide ein Verschleiß aufgetreten ist, der bei dem nächsten Bearbeitungsvorgang dazu führen würde, daß der Bohrungsdurchmesser kleiner als das vorgegebene Maß ist. Durch eine radiale Verstellung des Drehmeißels kann dieser Verschleiß kompensiert werden.

Eine radiale Verstellung des Drehmeißels kann auch dazu dienen, die Drehmeißelschneide nach einem Bearbeitungsvorgang für die Rückzugbewegung von der bearbeiteten Fläche abzuheben, um eine Markierung auf dieser Fläche zu verhindern.

Schließlich kann die radiale Verstellung in engen Bereichen auch dazu verwendet werden, aufeinanderfolgende Bohrungen oder Bohrungsabschnitte mit geringfügig voneinander abweichendem Durchmesser herzustellen, beispielsweise aufeinanderfolgende Bohrungsabschnitte mit gleichem Nenndurchmesser, jedoch unterschiedlicher Lage des Toleranzfeldes.

Für alle beschriebenen Anwendungsfälle ist es für die Erzielung eines hochwertigen Arbeitsergebnisses notwendig, daß alle Teile des Bohrwerkzeugs nach einem Verstellvorgang wieder eine möglichst stabile Lage einnehmen; jeder axialen Stellung der Schubstange muß eine bestimmte radiale Einstellung der Bohrstange eindeutig und mit hoher Wiederholgenauigkeit zugeordnet sein.

Bei dem bekannten Bohrwerkzeug stützt sich der mit der Bohrstange verbundene Stützarm nur in einer Richtung und nur an einer Keilfläche ab, wobei die Federwirkung der die Bohrstange tragenden Drehstabfedern für die Anlagekraft an der der Keilfläche sorgen. Damit bei der Anlage an der Keilfläche keine Setzungserscheinungen auftreten, d. h. damit sich die Einstellung der Bohrstange beim Bearbeitungsvorgang möglichst wenig ändert, muß die Vorspannkraft, mit der der Stützarm gegen die Keilfläche gedrückt wird, durch geeignete Wahl der Drehstabfedern möglichst hoch gewählt werden. Dadurch wird eine sehr genaue und möglichst spielfreie Führung des Verstellkörpers in seiner Führungsbohrung erforderlich.

Diese Forderungen können bei dem bekannten Bohrwerkzeug kaum oder nur mit größeren Schwierigkeiten erfüllt werden, weil die Führungsbohrung von der Spindelbohrung selbst gebildet wird. Wenn diese Bohrung mit ausreichend hoher Genauigkeit hergestellt und der Verstellkörper mit ausreichend enger Passung und hoher Genauigkeit geführt werden soll, kann das bekannte Bohrwerkzeug nur bei speziell für diesen Zweck ausgeführten Werkzeugmaschinenspindeln eingesetzt werden.

Aufgabe der Erfindung ist es daher, ein Bohrwerkzeug der im Oberbegriff des Hauptanspruchs umrissenen Art so auszugestalten, daß es an üblichen, nicht zu diesem Zweck besonders bearbeiteten Werkzeugmaschinenspindeln eingesetzt werden kann und gleichwohl eine sehr genaue Verstellung des Drehmeißels mit hoher Wiederholgenauigkeit ermöglicht.

Diese Aufgabe wird erfindungsgemäß durch die folgenden Merkmale erreicht:

die Führungsbohrung liegt mindestens teilweise innerhalb des Gehäusezylinders und ist in diesem zentriert;
gegenüber der Keilfläche und parallel zu dieser ist an dem Verstellkörper eine zweite Keilfläche ausgebildet;
der Stützarm ist zwischen den beiden Keilflächen formschlüssig geführt.

Die formschlüssige und deshalb praktisch spielfreie und verformungsfreie Abstützung des mit der Bohrstange verbundenen Stützarmes wirkt auf direktem Kraftflußweg auf den Gehäusezylinder, ohne daß eine Führung in der Spindelbohrung erforderlich ist, so daß keine Anforderungen an die Genauigkeit der vorhandenen Spindelbohrung gestellt werden. Das erfindungsgemäße Bohrwerkzeug kann deshalb ohne Beeinträchtigung der Genauigkeit des Arbeitsergebnisses bei unterschiedlichen Werkzeugmaschinenspindeln eingesetzt werden.

Als besonders vorteilhaft hat sich erwiesen, die Führungsbohrung an einer Führungs- und Zentrierhülse auszubilden, die in dem Gehäusezylinder zentriert ist und mit einem zylindrischen Ansatz in eine Spindelbohrung der Werkzeugmaschinenspindel ragen kann, wo zusätzlich, jedoch nicht notwendigerweise eine Zentrierung erfolgen kann. Wichtig ist in erster Linie nur die Zentrierung des Gehäusezylinders gegenüber dem Spindelflansch, die an einem üblicherweise an derartigen Werkzeugmaschinenspindeln vorhandenen kurzen Zentrierzylinder erfolgen kann.

Weitere vorteilhafte Ausgestaltungen des Erfindungsgedankens sind Gegenstand von Unteransprüchen.

Die Erfindung wird nachfolgend an einem

2

Ausführungsbeispiel näher erläutert, das in der Zeichnung dargestellt ist. Es zeigt

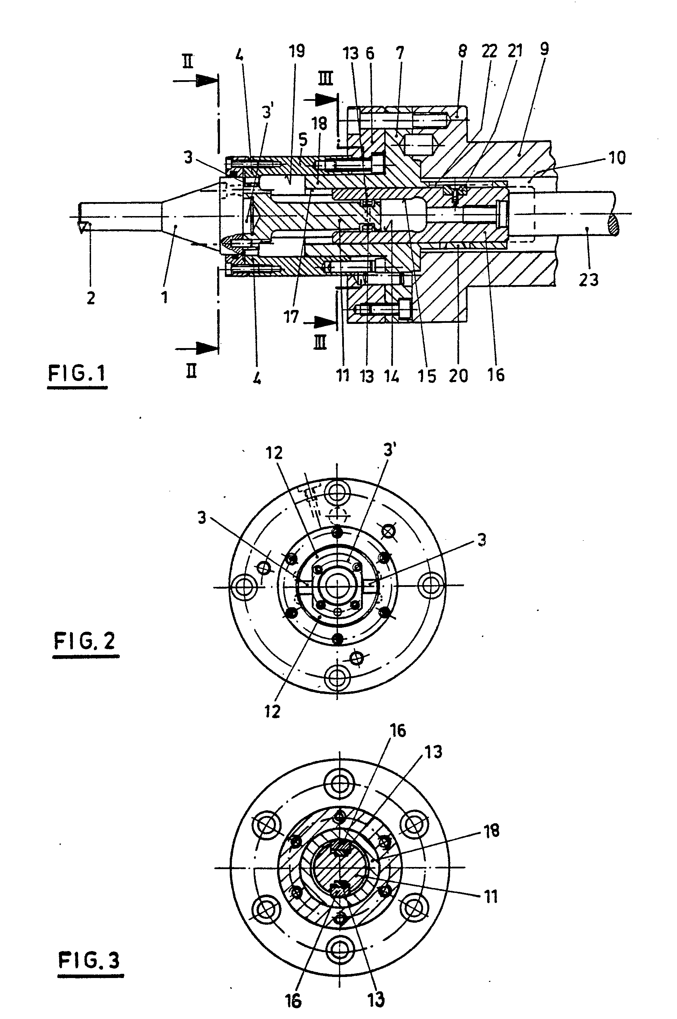

Fig. 1 ein Bohrwerkzeug im Längsschnitt, das an einer Werkzeugmaschinenspindel angebracht ist,

Fig. 2 eine Ansicht in Richtung des Pfeiles in Fig. 1, wobei die Bohrstange weggelassen ist, und

Fig. 3 einen Schnitt längs der Linie III-III in Fig.1.

Eine Bohrstange 1, die einen Drehmeißel 2 trägt, ist über zwei quer zur Längsachse der Bohrstange 1 angeordnete Drehstabfedern 3 mit einem Tragring 4 verbunden, der mit einem Gehäusezylinder 5 verbunden ist. Der Gehäusezylinder 5 ist mit einem Flanschring 6 verschraubt, der unter Zwischenlage eines Flansches 7 an einem Spindelflansch 8 einer Werkzeugmaschinenspindel 9 angeschraubt ist, die eine Spindelbohrung 10 aufweist.

Die Bohrstange 1 ist an ihrem der Werkzeugmaschinenspindel zugekehrten Ende starr mit einem Stützarm 11 verbunden, wobei die Bohrstange 1 und/oder der Stützarm 11 mit einer zwischen den beiden Drehstabfedern 3 liegenden Platte 3' verschraubt sein können, die einstückig mit den Drehstabfedern 3 und dem Tragring 4 ausgebildet ist. Dazu können aus einem scheibenförmigen Werkstück angenähert halbkreisförmige Schlitze 12 ausgefräst sein.

Nahe seinem freien Ende trägt der Stützarm 11 auf entgegengesetzten Seiten zwei Gleitkörper 13, über die er sich an einer ersten Keilfläche 14, die auf derselben Seite wie der Drehmeißel 2 liegt, und an einer zweiten Keilfläche 15 abstützt, die der Keilfläche 14 gegenüberliegt und parallel zu dieser angeordnet ist. Die beiden Keilflächen 14, 15 sind an einem gegabelten Verstellkörper 16 ausgebildet und sind unter einem kleinen Winkel von beispielsweise 1 bis 2° gegenüber der Spindellängsachse parallel zueinander geneigt.

Mit seiner zylindrischen Außenfläche ist der Verstellkörper in einer Führungsbohrung 17 in einer Führungs- und Zentrierhülse 18 geführt, die in einer Innenbohrung 19 des Gehäusezylinders 5 zentriert ist. Die Führungs- und Zentrierhülse 18 ist einstückig mit dem Flansch 7 und mit einem zylindrischen Ansatz 20 verbunden, der in die Spindelbohrung 10 ragt und dort ebenfalls zentriert sein kann, wenn die Spindelbohrung 10 mit ausreichender Genauigkeit hergestellt ist.

Eine am Verstellkörper 16 angebrachte Paßfeder 21 ist in einer Paßfedernut 22 des zylindrischen Ansatzes 20 geführt und verhindert eine Drehung des Verstellkörpers 16 gegenüber der Führungs- und Zentrierhülse 18.

Eine in der Spindelbohrung 10 angeordnete Schubstange 23 ist mit dem Verstellkörper 16 verbunden. Die Abstützung des Stützarmes 11 an den Keilflächen 14 und 15 erfolgt in einem Bereich, der außerhalb der Spindelbohrung 10 und weitgehend innerhalb des Gehäusezylinders 5 bzw. der mit diesem verbundenen Hülse 18 liegt.

Durch eine axiale Verstellung der lösbar mit dem Verstellkörper 16 verbundenen Schubstange 23 wird der Stützarm 11 durch die schwach geneigten Keilflächen 14 und 15 radial verschoben, so daß sich das den Drehmeißel 2 tragende freie Ende der Bohrstange 1 in entgegengesetzter Richtung radial verlagert, wobei die Drehstabfedern 3 die Schwenklagerung für diese Bewegung darstellen.

Das Bohrwerkzeug kann als Baueinheit vom Spindelflansch 8 abgeschraubt werden, wobei der Verstellkörper 16 von der Schubstange 23 ebenfalls gelöst wird.

Bei dem in der Zeichnung dargestellten Ausführungsbeispiel ist die Bohrstange 1 auswechselbar mit der Platte 3' verbunden, die wiederum einstückig mit dem Stützarm 11 ausgeführt ist.

## Patentansprüche

1. Bohrwerkzeug mit einem radial verstellbaren Drehmeißel (2) mit den Merkmalen:

a)  eine den Drehmeißel tragende Bohrstange (1) ist über quer zu ihrer Längsachse angeordnete Drehstabfedern (3) mit einem Tragring (4) verbunden, der über einen Gehäusezylinder (5) an einem Spindelflansch (8) einer antreibbaren Werkzeugmaschinenspindel (9) befestigbar ist;

b)  die Bohrstange (1) ist an ihrem der Werkzeugmaschinenspindel (9) zugekehrten Ende starr mit einem Stützarm (11) verbunden;

c)  der Stützarm (11) stützt sich auf eine schwach geneigte Keilfläche (14/15) eines in einer Führungsbohrung (17) geführten, axial mittels einer Schubstange (23) zur radialen Verstellung des Drehmeißels (2) bewegbaren Verstellkörpers;

gekennzeichnet durch die Merkmale:

d)  die Führungsbohrung (17) liegt mindestens teilweise innerhalb des Gehäusezylinders (5) und ist in diesem zentriert;

e)  gegenüber der Keilfläche (14) und parallel zu dieser ist an dem Verstellkörper (16) eine zweite Keilfläche (15) ausgebildet;

f)  der Stützarm (11) ist zwischen den beiden Keilflächen (14, 15) formschlüssig geführt.

2. Bohrwerkzeug nach Anspruch 1, dadurch gekennzeichnet, daß die Führungsbohrung (17) an einer Führungs- und Zentrierhülse (18) ausgebildet ist, die in dem Gehäusezylinder (5) zentriert ist und mit einem zylindrischen Ansatz (20) in eine Spindelbohrung (10) der Werkzeugmaschinenspindel (9) ragt.

3. Bohrwerkzeug nach Anspruch 2, dadurch gekennzeichnet, daß die Führungs- und Zentrierhülse (18) an der Werkzeugmaschinenspindel (9) zentriert ist.

4. Bohrwerkzeug nach Anspruch 2 und 3, dadurch gekennzeichnet, daß die Führungs- und Zentrierhülse (18) einen Flansch (7) aufweist, der den Gehäusezylinder (5) bzw. einen damit verbundenen Flansch (6) mit dem Spindelflansch (8) verbindet.

5. Bohrwerkzeug nach Anspruch 1, dadurch gekennzeichnet, daß der Verstellkörper (16) in der Führungsbohrung (17) undrehbar längsbeweglich geführt ist.

6. Bohrwerkzeug nach Anspruch 1, dadurch gekennzeichnet, daß der Verstellkörper (16) an der Schubstange (23) lösbar befestigt ist.

7. Bohrwerkzeug nach Anspruch 1, dadurch gekennzeichnet, daß die Bohrstange (1) lösbar an einer mit den Drehstabfedern (3) verbundenen Platte (3') angebracht ist.

## Claims

1. Boring tool with a radially adjustable toolholder having the following characteristics:

a) a boring bar (1) supporting the toolholder is connected via torsion rods (3) arranged transversely to its longitudinal axis to a supporting ring (4) which can be mounted via a housing cylinder (5) on a spindle flange (8) of a rotatable-machine tool spindle (9);

b) the boring bar (1) is connected at its end facing the machine-tool spindle (9) rigidly to a bracket (11);

c) the bracket (11) rests on a slightly inclined wedge face (14, 15) of an adjusting body guided in a guide hole (17), movable axially by means of a pushing rod (23) for a radial adjustment of the toolholder (2);

characterised in that:

d) the guide hole (17) is located at least partially inside the housing cylinder (5) and is centred in the latter;

e) opposite the wedge face (14) and parallel to the latter, a second wedge face (15) is formed on the adjusting body (16);

f) the bracket (11) is guided between the two wedge faces (14, 15) with form-closed contact.

2. Boring tool according to claim 1, characterised in that the guide hole (17) is formed on a guiding and centering sleeve (18) centered in the housing cylinder (5) and projecting with a cylindrical shoulder (20) into a spindle bore (10) of the machine-tool spindle (9).

3. Boring tool according to claim 2, characterised in that the guiding and centering sleeve (18) is centered on the machine-tool spindle (9).

4. Boring tool according to claim 2 and 3, characterised in that guiding and centering sleeve (18) has a flange (7) which connects the housing cylinder (5) or a flange (6) linked to the latter to the spindle flange (8).

5. Boring tool according to claim 1, characterised in that the adjusting body (16) is guided non-rotatably longitudinally in the guide hole (17).

6. Boring tool according to claim 1, characterised in that the adjusting body (16) is mounted detachably on the pushing rod (23).

7. Boring tool according to claim 1, characterised in that the boring bar (1) is mounted detachably on a plate (3') connected to the torsion rods (3).

## Revendications

1. Outil d'alésage comportant un outil de tournage (2) ajustable radialement présentant les caractéristiques suivantes:

a) une tige porte-foret (1) portant un outil de tournage (2) est assemblée avec un anneau porteur (4) par l'intermédiaire de ressorts à barre de torsion (3) disposés transversalement à l'axe de ladite tige porteforet, cet anneau porteur (4) pouvant être fixé par l'intermédiaire d'un carter cylindrique (5) à une bride (8) de la broche qui peut être entrainée en rotation et qui fait partie d'une machine-outil;

b) du côté broche, la tige porte-foret (1) est assemblée rigidement avec un bras-support (11);

c) le bras-support (11) s'appuie sur une surface en coin (14, 15) faiblement inclinée d'une pièce d'ajustage (16) qui est guidée dans une rainure de guidage (17) et qui peut être déplacée axialement au moyen d'un poussoir (23) afin d'ajuster radialement l'outil de tournage;

caractérisé en ce que:

d) la rainure de guidage (17) est située au moins partiellement à l'intérieur du carter cylindrique (5) et est centrée dans celui-ci;

e) en face de la première surface en coin (14), il en existe une deuxième (15) formée sur la pièce d'ajustage parallèment à la première;

f) le bras-support (11) est placé entre les deux surfaces en coin (14, 15) en épousant leur forme.

2. Outil d'alésage suivant la revendication 1 caractérisé en ce que la rainure de guidage (17) est usinée dans une douille de guidage et de centrage (18) qui est centrée dans le carter cylindrique (5) et dont un bout cylindrique (20) pénètre dans l'alésage (10) de la broche (9) de la machine-outil.

3. Outil d'alésage suivant la revendication 2 caractérisé en ce que la douille de guidage et de centrage (18) est centrée dans la broche (9) de la machine-outil.

4. Outil d'alésage suivant les revendications 2 et 3 caractérisé en ce que la douille de guidage et de centrage (18) présente une bride (7) qui assemble le carter cylindrique (5) ou une bride (6) qui y, est fixée avec la bride (8) de la broche.

5. Outil d'alésage suivant la revendication 1 caractérisé en ce que la pièce d'ajustage (16) est placée longitudinalement dans la rainure de guidage (17) en vue d'empêcher toute rotation.

6. Outil d'alésage suivant la revendication 1 caractérisé en ce que la pièce d'ajustage (16) est fixée de façon amovible au poussoir (23).

7. Outil d'alésage suivant la revendication 1 caractérisé en ce que la tige porte-foret (1) est assemblée de façon amovible à une plaque (3') jointe aux ressorts à barre de torsion (3).

FIG.1

FIG.2

FIG.3